# EUROPÄISCHE PATENTSCHRIFT

(11) **EP 4 551 485 B1**
(45) Veröffentlichungstag und Bekanntmachung des Hinweises auf die Patenterteilung: **16.07.2025**
(21) Anmeldenummer: 23757850.5
(22) Anmeldetag: 09.08.2023
(51) Int. Cl.: B65G 54/02

(54) **TRANSPORTSYSTEM, TRANSPORTVORRICHTUNG UND LAUFSCHIENE**
TRANSPORT SYSTEM, TRANSPORT DEVICE AND RUNNING RAIL
SYSTÈME DE TRANSPORT, DISPOSITIF DE TRANSPORT ET RAIL DE ROULEMENT

(30) Priorität: 09.08.2022 DE 102022120032
(43) Veröffentlichungstag der Anmeldung: 14.05.2025
(73) Patentinhaber: Beckhoff Automation GmbH, 33415 Verl (DE)
(72) Erfinder: NEUFELD, Jörg, 33104 Paderborn (DE); UELPENICH, Ray, 33415 Verl (DE)
(74) Vertreter: Patentanwaltskanzlei WILHELM & BECK
(86) Internationale Anmeldenummer: PCT/EP2023/072042
(87) Internationale Veröffentlichungsnummer: WO 2024/033412

(56) Entgegenhaltungen:
- EP-A1- 3 476 773
- EP-A1- 3 929 113
- WO-A1-2012/084648
- CN-A- 109 435 972
- DE-A1- 3 812 292
- US-B2- 9 856 096

## Beschreibung

Die vorliegende Erfindung betrifft ein Transportsystem.

Diese Patentanmeldung beansprucht die Priorität der deutschen Patentanmeldung DE 10 2022 120 032.9.

Transportvorrichtungen, die eine Mehrzahl an Rollen aufweisen und über die Rollen Kontakt zu einer gekrümmten Laufschiene eines Transportsystems haben, sind unter anderem bereits aus der EP 3 476 773 A1 bekannt. Die EP 3 476 773 A1 offenbart eine Transportvorrichtung, die mit einer Laufschiene zusammenwirkt, wobei die Transportvorrichtung drei Rollen aufweist, von denen zwei Rollen jeweils an einer ersten Lauffläche der Laufschiene drehbar anliegen und eine dritte Rolle drehbar an einer zweiten Lauffläche der Laufschiene anliegt. Die erste und zweite Lauffläche ist jeweils an gegenüberliegenden Seiten der Laufschiene angeordnet.

Damit die genannten Rollen Kontakt zu den Laufflächen der Laufschiene aufweisen - insbesondere in einem gekrümmten Laufschienenabschnitt bzw. bei einem Übergang von einem geraden zu einem gekrümmten Laufschienenabschnitt (und umgekehrt) - ist die dritte Rolle an einem beweglichen Element der Transportvorrichtung translatorisch gelagert. Das bewegliche Element ist über eine Federeinheit vorgespannt, wobei die Federeinheit eine Federkraft bewirkt, die eine translatorische Bewegung der dritten Rolle relativ zur ersten und zweiten Rolle, beispielsweise in vertikaler Richtung aufeinander zu bzw. voneinander weg, ermöglicht.

Bei derartigen vorgespannten Transportvorrichtungen bzw. Transportsystemen, die ein gefedertes bewegliches Element mit translatorischer Führung bzw. Linearführung aufweisen, tritt jedoch häufig das Problem eines ungewollten Drehmoments auf diese translatorische Führung auf, wodurch eine parallele und damit stabile Ausrichtung der Transportvorrichtung zur Laufschiene während der Führung entlang eines gekrümmten Laufschienenabschnitts nicht mehr gewährleistet ist. Die Transportvorrichtung beginnt deswegen zu kippen. Der Effekt ließe sich beispielsweise vermeiden, würden die Federeinheit und die Linearführung in der gleichen Ebene angeordnet werden, in der auch die dritte Rolle selbst angeordnet ist.

Aus der DE 38 12 292 A1 ist ein Transportsystem mit den Merkmalen des ersten Teils des Anspruchs 1 bekannt.

Die Aufgabe der vorliegenden Erfindung besteht darin, ein verbessertes Transportsystem mit stabiler Führung anzugeben.

Diese Aufgabe wird durch die Merkmale des Anspruchs 1 gelöst. Weitere vorteilhafte Ausführungsformen der Erfindung sind in den abhängigen Ansprüchen angegeben.

Es wird ein Transportsystem vorgeschlagen, das zumindest eine Laufschiene mit zumindest einem Laufschienenabschnitt und zumindest einer beweglichen Transportvorrichtung, die entlang des zumindest einen Laufschienenabschnitts geführt wird, umfasst. Der Laufschienenabschnitt weist eine erste Lauffläche auf. Die erste Lauffläche weist eine im Wesentlichen abgerundete Fläche auf und umfasst jeweils einen Führungsmittelpunkt. Der Führungsmittelpunkt bildet jeweils im Wesentlichen einen geometrischen Kreismittelpunkt, dessen Kreisfläche jeweils näherungsweise die abgerundete Fläche der ersten Lauffläche einschließt. Die Transportvorrichtung weist zumindest eine erste Rolle auf, die drehbar an der ersten Lauffläche anliegt, wobei die erste Rolle rotatorisch an zumindest einem beweglichen Element eines Grundkörpers der Transportvorrichtung gelagert ist, um eine Schwenkbewegung entlang der im Wesentlichen abgerundeten Fläche der ersten Lauffläche auszuführen, wobei eine Drehachse des beweglichen Elements für die Schwenkbewegung und der Führungsmittelpunkt im Wesentlichen auf gleicher Höhe angeordnet sind.

Die Laufschiene umfasst zumindest einen gekrümmten Laufschienenabschnitt. Die Transportvorrichtung wird entlang des zumindest einen gekrümmten Laufschienenabschnitts geführt. Der gekrümmte Laufschienenabschnitt weist die erste Lauffläche und eine zweite Lauffläche auf, die an gegenüberliegenden Seiten des gekrümmten Laufschienenabschnitts angeordnet sind. Die erste Lauffläche und die zweite Lauffläche weisen jeweils die im Wesentlichen abgerundete Fläche auf und umfassen jeweils den Führungsmittelpunkt. Der Führungsmittelpunkt bildet jeweils im Wesentlichen einen geometrischen Kreismittelpunkt, dessen Kreisfläche jeweils näherungsweise die abgerundete Fläche der ersten Lauffläche oder die abgerundete Fläche der zweiten Lauffläche einschließt. Die Transportvorrichtung weist zur Führung eine Mehrzahl an Rollen auf. Zumindest die erste Rolle und eine zweite Rolle liegen jeweils drehbar an der ersten Lauffläche an und zumindest eine dritte Rolle liegt drehbar an der zweiten Lauffläche an. Die erste Rolle und die zweite Rolle und/oder die dritte Rolle sind rotatorisch an zumindest einem beweglichen Element eines Grundkörpers der Transportvorrichtung gelagert. Die erste Rolle und die zweite Rolle und/oder die dritte Rolle, die jeweils rotatorisch am beweglichen Element gelagert ist, ist jeweils ausgelegt, eine Schwenkbewegung entlang der im Wesentlichen abgerundeten Fläche der ersten Lauffläche auszuführen und/oder eine Schwenkbewegung entlang der im Wesentlichen abgerundeten Fläche der zweiten Lauffläche auszuführen. Eine Drehachse des beweglichen Elements und der Führungsmittelpunkt sind im Wesentlichen auf gleicher Höhe angeordnet.

Näherungsweise auf gleicher Höhe kann beispielsweise eine Größenordnung von bis zu 1 mm Differenz in der Höhenanordnung der Drehachse des beweglichen Elements und des Führungsmittelpunkts betragen, und kann aus dem Grund auch näherungsweise in einer gemeinsamen Ebene liegend verstanden werden.

Unter einer im Wesentlichen abgerundeten Fläche kann ein abgerundetes oder rundes Laufschienenprofil bzw. eine abgerundete oder runde Fläche/Oberfläche verstanden werden. Beispielsweise kann das Laufschienenprofil in zweidimensionaler Darstellung näherungsweise ein Kreissegment umfassen.

Eine Schwenkbewegung kann eine Drehbewegung sein, die weg vom Grundkörper der Transportvorrichtung gerichtet ist. Sie kann insbesondere zur Nachstellung der Vorspannung in einem gekrümmten Laufschienenabschnitt, also einem Kurvenbereich, und der Aufrechterhaltung des Rollenkontakts auf den Laufflächen der Laufschiene dienen.

Der Führungsmittelpunkt kann jeweils eine Achse sein, die durch die Laufschiene verläuft und näherungsweise auf gleicher Höhe bzw. in einer gemeinsamen Ebene mit der Drehachse des beweglichen Elements liegt.

Das vorgeschlagene Transportsystem bzw. die vorgeschlagene Transportvorrichtung für das Transportsystem verbessern vorteilhaft eine Positionsgenauigkeit einer Antriebsvorrichtung der Transportvorrichtung des Transportsystems mithilfe der vorzugsweisen rotatorischen Lagerung der ersten und zweiten Rolle über das bewegliche Element. Die Antriebsvorrichtung ist vorzugsweise als Linearantrieb ausgebildet und kann Motormodule mit Spulen umfassen, die insbesondere als Linearmotormodule entlang der Laufschiene ausgebildet sind. Die Anschubkraft der Transportvorrichtung, die zu einer Bewegung der Transportvorrichtung entlang der Laufschiene führt, kann sich aus einer Wirkverbindung zwischen Magneten, die an der Transportvorrichtung angeordnet sind, und den Spulen der Motormodule ergeben. Mithilfe der vorgeschlagenen Konstruktion können Magneten und Spulen in ihrer Position besser überlappen und dabei ihre Wirkverbindung für die Fortbewegung der Transportvorrichtung verstärken.

Ein weiterer Vorteil des vorgeschlagenen Transportsystems bzw. der vorgeschlagenen Transportvorrichtung besteht darin,
dass die Transportvorrichtung basierend auf der vorzugsweise rotatorischen Lagerung der ersten Rolle an dem beweglichen Element einfacher auf die Laufschiene gesetzt werden kann (bzw. einfacher von der Laufschiene entfernt werden kann) als herkömmliche Systeme, die zum Aufgleisen oder Entnehmen von Transportvorrichtungen eine Verwendung einer sog. Schienenschleuse - also eines speziell zu dem Zwecke in die Laufschiene einzufügenden Laufschienenabschnitts - erforderlich machen. Hierzu muss die Laufschiene zumindest teilweise dejustiert werden. Sowohl die Schienenschleuse als auch die in diesem Zusammenhang durchzuführenden Schritte fallen mithilfe der vorgeschlagenen Anordnung vollständig weg.

Ferner kann mithilfe der vorgeschlagenen Anordnung gewährleistet werden, dass die Änderung der Vorspann-, Anpress-, Andruck- oder Rollenkraft zwischen einem geraden Laufschienenabschnitt und einem gekrümmten Laufschienenabschnitt für die erste Rolle der Transportvorrichtung auf der ersten Lauffläche sowie des Grundkörpers der Transportvorrichtung gering ist. Dies wirkt sich zudem vorteilhaft auf Schwingverhalten, Regelparameter der Transportvorrichtung bzw. des Transportsystems aus und verbessert die Stabilität der Transportvorrichtung auf der Laufschiene, sodass eine vereinfachte Führung derer entlang der Laufschiene ermöglicht wird.

Die Stabilität der Transportvorrichtung auf den Laufflächen der Laufschiene des Transportsystems hängt dabei von mehreren Faktoren ab und wird maßgeblich durch den Abstand der gegenüberliegenden Rollen zueinander, der Wahl des Rollen- und Laufschienenprofils, sowie der Vorspannkraft des Transportvorrichtung auf den Laufflächen der Laufschiene des Transportsystems bestimmt. Positiv auf die Stabilität der Transportvorrichtung wirkt sich vor allem die Lage der Drehachse des beweglichen Elements und des Führungsmittelpunkts näherungsweise auf gleicher Höhe, also in einer gemeinsamen Ebene auf die Transportvorrichtung aus, da diese Anordnung verhindert, dass die Transportvorrichtung bei der Schwenkbewegung entlang der gekrümmten Fläche der Lauffläche im gekrümmten Laufschienenabschnitt insgesamt zu kippen beginnt. Trotz der Schwenkbewegung liegt die Transportvorrichtung stabil auf den Laufflächen.

In einer weiteren Ausführungsform definiert die erste Rolle bei der Schwenkbewegung jeweils eine Schwenkebene, die gegenüber einer Fahrtebene, die im Wesentlichen parallel zu einer Führungsrichtung der ersten Rolle orientiert ist, geneigt orientiert ist. Vorteilhaft lässt sich trotz der Schwenkbewegung des beweglichen Elements, das vorzugsweise als ein Scharnierblock ausgebildet ist, zur Nachstellung der Vorspannung in einem gekrümmten Laufschienenabschnitt, ein insgesamtes Verkippen der Transportvorrichtung vermeiden, aber Kontakt der ersten Rolle zu den Laufflächen weiterhin aufrechterhalten. Hierzu ist die Lage der Drehachse des beweglichen Elements und des Führungsmittelpunkts vorteilhaft gemäß der obenstehenden Erläuterung gewählt worden.

In einer weiteren Ausführungsform ist das bewegliche Element zur rotatorischen Lagerung über zumindest eine Federeinheit vorgespannt, die an das bewegliche Element angrenzt. Die Federeinheit weist ein Federelement auf. Das Federelement und die Drehachse weisen einen ersten Abstand zueinander auf. Die erste Rolle und die Drehachse weisen jeweils einen zweiten Abstand zueinander auf. Der erste Abstand kann größer als der zweite Abstand ausgebildet. Die genannte Anordnung hat den Vorteil, dass eine von der Federeinheit bereitgestellte Federkraft unter Ausnutzung des Hebelgesetzes für die genannten Abstände zu einer vergrößerten Rollenkraft, die auf die erste und zweite Rolle zum Anpressen an die erste Lauffläche wirkt, führt (beispielsweise kann die Federkraft vorteilhaft um den Faktor mithilfe der vorgeschlagenen Anordnung erhöht werden). Vorteilhaft kann dieser Umstand bei der Wahl des Federelements berücksichtigt werden. Bevorzugt wird daher als Federelement der Federeinheit eine Schraubendruckfeder eingesetzt, da sie eine hohe Dauerschwingfestigkeit bietet, kompakte Abmessungen aufweist und eine relativ große Federkraft erzeugen kann. Die Anpress-, Andruck-, Vorspann-, oder Rollenkraft ergibt sich dabei vorteilhaft aus der Federkraft, wie oben genannt.

In einer weiteren Ausführungsform weist die Federeinheit ferner ein Spannelement, das insbesondere als Spannschraube ausgebildet ist, auf. Das Spannelement ist ausgelegt, das Federelement, das insbesondere als eine Schraubendruckfeder ausgebildet ist, vorzuspannen. Vorteilhaft kann die Vorspannung mithilfe der Federeinheit eingestellt bzw. geändert werden, ohne, dass die Transportvorrichtung von der Laufschiene entfernt werden muss. Dies spart Zeit und Kosten.

Darüber hinaus kann durch die Ausnutzung der o.g. Hebelwirkung zur Erzielung der benötigten Vorspannkraft ein kleines Federelement verwendet werden, was vorteilhaft eine kompakte, platzsparende Bauweise der Transportvorrichtung und des Transportsystems ermöglicht. Der verwendete Federtyp des Federelements (Schraubendruckfeder) weist vorteilhaft eine hohe Dauerschwingfestigkeit auf, ist daher robust und ideal zur Verwendung geeignet.

Ein automatisches Nachstellen des Rollen- oder Laufschienenverschleißes mithilfe der gefederten, rotatorischen Lagerung ermöglicht zudem vorteilhaft eine nahezu konstante Vorspannung über die gesamte Laufzeit (verlängert also die Laufzeit der einzelnen Komponenten, insbesondere der Rollen) sowie ein konstantes Regel- und Schwingverhalten der Transportvorrichtung (ohne erforderliches Nachjustieren).

In einer weiteren Ausführungsform weist das Transportsystem eine Antriebsvorrichtung für die Transportvorrichtung auf. Die Antriebseinrichtung ist vorzugsweise als Linearantrieb ausgebildet und kann Motormodule mit Spulen umfassen, die insbesondere als Linearmotormodule entlang der Laufschiene ausgebildet sind. Die Spulen sind einzeln bestrombar. Die Magneten sind an der wenigstens einen Transportvorrichtung angeordnet. Die Spulen erzeugen ein magnetisches Feld für eine Wirkverbindung mit den Magneten, die an der wenigstens einen Transportvorrichtung angeordnet sind. Die wenigstens eine Transportvorrichtung wird durch die Wirkverbindung in Bewegung versetzt.

Vorteilhaft an der Ausgestaltung des Transportsystems ist, dass keine Kabel für die Umsetzung erforderlich sind. Diese würden das Transportsystem unübersichtlich machen und zur eingeschränkten Beweglichkeit der Transportvorrichtung führen. Darüber hinaus erfordert das Transportsystem keine komplizierte Installation und Wartung, da keine Getriebe, Riemen oder Ketten für das Transportsystem eingesetzt werden. Mit flexiblen Bewegungsprofilen (beispielsweise Ansteuerung nur einzelner Transportvorrichtungen des Transportsystems, etc.) lassen sich ferner einfache bis hoch komplexe Abläufe realisieren und somit der gesamte Fertigungsprozess optimieren. Zudem ist das vorgeschlagene Transportsystem in reinigungsfreundlicher Bauweise gefertigt und eignet sich damit vorteilhaft auch für hygienisch sensitive Einsatzfelder.

In einer weiteren Ausführungsform ist der Grundkörper der Transportvorrichtung im Wesentlichen U-förmig ausgebildet und weist eine Basis mit einem ersten Schenkel und einem zweiten Schenkel auf. Der Grundkörper weist zumindest teilweise an einer Außenseite der Basis und einer Außenseite des ersten Schenkels eine Ausnehmung auf, in der das mindestens eine bewegliche Element angeordnet ist. Das Federelement ist im Bereich der Basis angeordnet. Die Magneten der Antriebsvorrichtung sind jeweils an einer ersten Innenseite des ersten Schenkels und an einer zweiten Innenseite des zweiten Schenkels des U-förmigen Grundkörpers angeordnet. Dies ermöglicht vorteilhaft eine platzsparende, kompakte und ressourcenschonende Bauweise.

Die an sich nicht beanspruchte Laufschiene kann zumindest einen gekrümmten Laufschienenabschnitt aufweisen, wobei die zumindest eine Transportvorrichtung entlang des zumindest einen gekrümmten Laufschienenabschnitts geführt wird. Der gekrümmte Laufschienenabschnitt weist zumindest eine erste Lauffläche und eine zweite Lauffläche auf, die an gegenüberliegenden Seiten des gekrümmten Laufschienenabschnitts angeordnet sind. Die erste Lauffläche und die zweite Lauffläche weisen jeweils eine im Wesentlichen abgerundete Fläche auf und umfassen jeweils einen Führungsmittelpunkt. Der Führungsmittelpunkt bildet im Wesentlichen einen geometrischen Kreismittelpunkt, dessen Kreisfläche jeweils näherungsweise die abgerundete Fläche der ersten Lauffläche oder die abgerundete Fläche der zweiten Lauffläche einschließt.

Vorteilhaft ermöglicht die Geometrie der beiden Laufflächen eine Schwenkbewegung, vorzugsweise der ersten und zweiten Rolle, die an dem beweglichen Element angeordnet sind, entlang der abgerundeten Fläche der ersten Lauffläche in einem gekrümmten Laufschienenabschnitt zur Nachstellung der Vorspannung der Transportvorrichtung und damit zur Aufrechterhaltung des Kontakts der genannten Rollen. Dabei kann sich das Rollenprofil vorteilhaft von dem genannten Laufschienenprofil, das beispielsweise näherungsweise ein Kreissegment bilden kann, unterscheiden. Dadurch ist die vorgeschlagene Laufschiene vorteilhaft mit vielen Transportvorrichtungen, die unterschiedliche Rollenprofile aufweisen, gut kompatibel.

In einer weiteren Ausführungsform weist die Laufschiene ferner zumindest einen geraden Laufschienenabschnitt auf, der sich an den gekrümmten Laufschienenabschnitt anschließt. Der gekrümmte Laufschienenabschnitt weist einen ersten Laufflächenabstand auf und der gerade Laufschienenabschnitt weist einen zweiten Laufflächenabstand auf. Der erste Laufflächenabstand und der zweite Laufflächenabstand sind im Wesentlichen identisch ausgebildet.

Vorteilhaft sind die genannten Laufflächenabstände im Wesentlichen identisch ausgebildet, sodass die Distanz der Laufflächen zum Beispiel näherungsweise konstant über die Laufschiene ist - unabhängig davon, ob der Laufschienenabschnitt gerade oder gekrümmt ist. Zur Sicherstellung des Kontakts der Rollen und zur Nachstellung der Vorspannung, sind die erste und zweite Rolle vorteilhaft rotatorisch an dem oben genannten beweglichen Element des Grundkörpers der Transportvorrichtung gelagert, um im Kurvenbereich, also in einem gekrümmten Laufschienenabschnitt, entlang der abgerundeten Fläche der ersten Lauffläche die Schwenkbewegung auszuführen.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden.

Es zeigen:
Fig. 1 eine perspektivische Ansicht einer Transportvorrichtung mit einem gekrümmten Laufschienenabschnitt;
Fig. 2 eine schematische Darstellung einer Anordnung von Rollen der Transportvorrichtung;
Fig. 3 eine Schnittansicht der Transportvorrichtung;
Fig. 4 ein Detailausschnitt aus Fig. 3 mit angedeuteter Rollenschwenkbewegung beim Nachstellen der Rollenvorspannung;
Fig. 5 eine vergrößerte perspektivische Darstellung des beweglichen Elements, an dem eine erste Rolle und eine zweite Rolle der Transportvorrichtung rotatorisch gelagert sind;
Fig. 6 ein Transportsystem mit der Transportvorrichtung in einer perspektivischen Darstellung;
Fig. 7 eine vergrößerte Schnittansicht der Transportvorrichtung mit einem geraden Laufschienenabschnitt, und
Fig. 8 eine schematische Darstellung eines Entnahmevorgangs der Transportvorrichtung von der Laufschiene.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten und/oder Größen handelt.

Anhand der folgenden Figuren wird ein Ausführungsbeispiel eines Transportsystems mit zumindest einer Transportvorrichtung beschrieben. Beispielsweise kann sich das Transportsystem um ein lineares Transportsystem handeln, das in der Automatisierungstechnik eingesetzt wird. Neben einem Linearantrieb sind auch andere Antriebssysteme für das Transportsystem denkbar, wie beispielsweise ein Kettenförderer, ein Zahnriemenantrieb oder ein Antriebsystem, das ein Getriebe umfasst. Dabei ist die Verwendungsangabe des Transport-systems nicht einschränkend zu verstehen, da sich die Erfindung in allen Transportsystemen, in denen zumindest eine Transportvorrichtung vorgesehen ist, einsetzen lässt. Die nachfolgenden Figuren werden anhand eines linearen Transportsystems beschrieben, dessen zumindest eine Transportvorrichtung beispielsweise außen geführt wird.

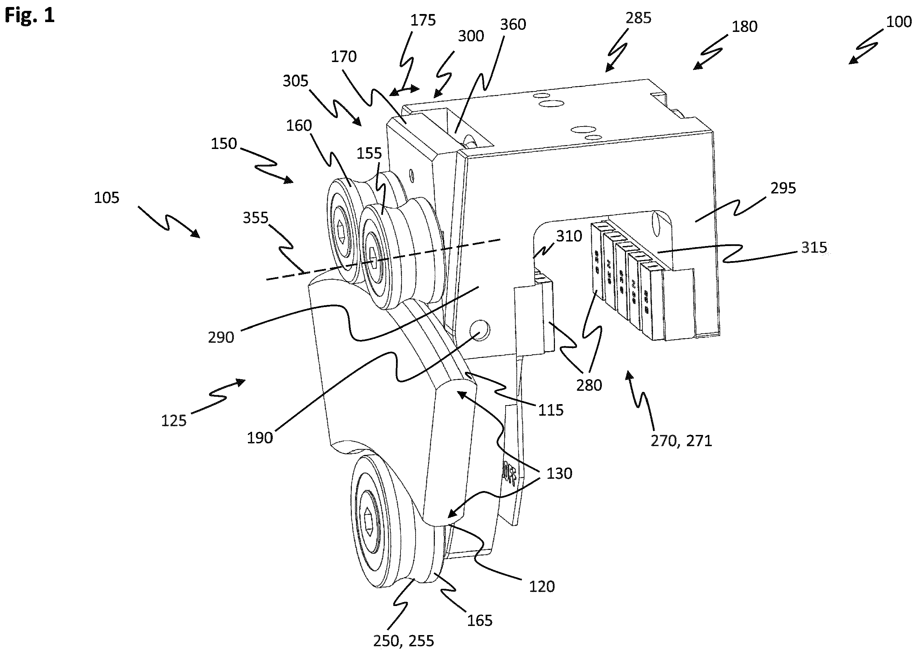

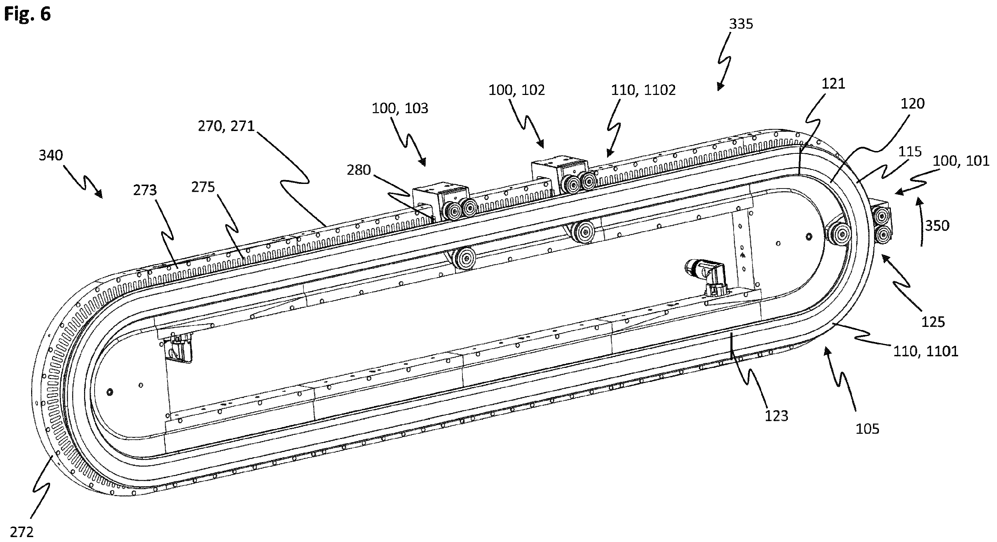

Fig. 1 zeigt einen Ausschnitt eines Transportsystem 335 mit einer Transportvorrichtung 100 und einer Laufschiene 105. Das Transportsystem 335 ist dann in Fig. 6 dargestellt, weshalb Fig. 1 und 6 miteinander beschrieben werden. In Fig. 6 sind dann drei Transportvorrichtung, eine erste Transportvorrichtung 101, eine zweite Transportvorrichtung 102 und eine dritte Transportvorrichtung 103 gezeigt. Die Laufschiene 105 des Transportsystems 335 kann beispielsweise eine Stahlschiene bilden. Die Materialangabe der Laufschiene 105 ist jedoch nur exemplarisch zu verstehen und kann auch abweichend umgesetzt sein. In Fig. 1 ist die Laufscheine 105 gekrümmt ausgeformt. Die Laufschiene 105 kann aber auch gerade ausgebildet sein. Die Laufschiene 105 kann aber ein beliebige Form aufweisen und sich beispielsweise sowohl geraden Laufschienenabschnitten 1102 als auch gekrümmten Laufschienenabschnitten 1101 zusammensetzen.

In dem in Fig. 6 gezeigten Ausführungsbespiel weist die Laufschiene 105 zumindest einen gekrümmten Laufschienenabschnitt 1101 sowie zumindest einen geraden Laufschienenabschnitt 1102 auf, wobei sich der zumindest eine gerade Laufschienenabschnitt 1102 an den gekrümmten Laufschienenabschnitt 1101 anschließt, um eine geschlossene Bahn 340 zu bilden, beispielsweise ein geschlossenes Oval. Die Laufscheine 105 kann aber auch als offenes System ausgebildet sein.

Der gekrümmte Laufschienenabschnitt 1101 weist einen ersten Laufflächenabstand 121 auf und der gerade Laufschienenabschnitt 1102 weist einen zweiten Laufflächenabstand 123 auf. Dabei bezeichnet der erste Laufflächenabstand 121 sowie der zweite Laufflächenabstand 123 beispielsweise jeweils eine Distanz zwischen einer ersten Lauffläche 115 und einer zweiten Lauffläche 120, die an gegenüberliegenden Seiten 125 des gekrümmten Laufschienenabschnitts 1101 sowie des geraden Laufschienenabschnitts 1102 angeordnet sind. Der erste Laufflächenabstand 121 kann dabei beispielsweiseidentisch zum zweiten Laufflächenabstand 123 ausgebildet sein, , das heißt, gleich groß bzw. gleich lang. In anderen Worten ausgedrückt, ist der Laufschienenquerschnitt beispielsweisekonstant für den gekrümmten Laufschienenabschnitt 1101 und den geraden Laufschienenabschnitt 1102.

In Fig. 6 wird die erste Transportvorrichtung 101 in einer Führungsrichtung 350 entlang des gekrümmten Laufschienenabschnitts 1101 geführt. Die zweite Transportvorrichtung 102 sowie die dritte Transportvorrichtung 103 werden entlang des geraden Laufschienenabschnitts 1102 geführt.

Dabei kann die Führung jeweils einer Außenführung entsprechen, da die erste Lauffläche 115 und die zweite Lauffläche 120 an gegenüberliegenden Seiten 125 der Laufschiene 105 angeordnet sind. Die Führungsrichtung 350 kann für den gekrümmten Laufschienenabschnitt 1101 und den gerade Laufschienenabschnitt 1102 zum Beispiel gleich ausgerichtet bzw. orientiert sein. Es versteht sich, dass die Anzahl der dargestellten Transportvorrichtungen 100 lediglich exemplarischer Natur ist und das Transportsystem 335nicht darauf eingeschränkt ist.

Die erste Transportvorrichtung 101, die zweite Transportvorrichtung 102 und die dritte Transportvorrichtung 103 können jeweils identisch aufgebaut sein und gleiche Komponenten aufweisen, daher gelten nachfolgende Erläuterungen (auch im Zusammenhang mit den folgenden Figuren) für die erste Transportvorrichtung 101, zweite Transportvorrichtung 102 oder dritte Transportvorrichtung 103 gleichermaßen. Die

Transportvorrichtungen 100 können auch als Schlitten, umfassend eine Plattform zum Transportieren eines Objekts, als Wagen, aufweisend eine Halterung zum Befestigen und Transportieren eines Objekts oder als Mover bezeichnet werden. Darüber hinaus sind weitere Ausgestaltungen der Transportvorrichtungen 100denkbar.

Die Transportvorrichtung 100 weist eine Mehrzahl an Rollen 150 auf, die beispielsweise aus Metall gefertigt sind. Auch hier ist die Materialangabe jedoch nicht einschränkend zu verstehen und kann auch in alternativer Weise umgesetzt sein. An der ersten Lauffläche 115 liegen beispielsweise eine erste Rolle 155 und eine zweite Rolle 160 jeweils drehbar an, während an der zweiten Lauffläche 120 beispielsweise eine dritte Rolle 165 drehbar anliegt. Drehbar ist hierbei beispielsweise so zu verstehen, dass die erste Rolle 155 und die zweite Rolle 160 an der ersten Lauffläche 115 anliegen und abrollen und die dritte Rolle 165 an der zweiten Lauffläche 120 anliegt und abrollt. Das drehbare Anliegen bzw. das Abrollen kann dabei beispielsweise jeweils um eine Rollendrehachse 355 erfolgen, die näherungsweise mittig durch die Rollen verläuft, in Fig. 1 jedoch nur exemplarisch für die erste Rolle 155 dargestellt ist.

Die Transportvorrichtung kann alternativ auch mit einer abweichenden Anzahl von Rollen konstruiert und gebaut sein. An der Transportvorrichtung ist dabei für jede Lauffläche wenigstens eine Rolle vorgesehen. Beispielsweise kann die Transportvorrichtung 100 nur mit der ersten Rolle 155, die an der ersten Lauffläche 115 drehbar anliegt, und der dritte Rolle 165, die drehbar an der zweiten Lauffläche 120 anliegt, ausgeführt sein (nicht dargestellt). An der Transportvorrichtung 100 kann für jede Lauffläche eine beliebige Anzahl von Rollen vorgesehen sein. Die Anzahl der Rollen pro Lauffläche kann wie bei dem in Fig. 1 gezeigten Ausführungsbeispiel unterschiedlich sein. Eine solche Auslegung ist insbesondere bei gekrümmten Laufschienenabschnitten 1101 vorteilhaft, um eine verbesserte Kurvenfahrt zu ermöglichen. Dabei können beispielsweise alle Rollen mit gleich großem Rollen-Durchmesser umgesetzt sein.

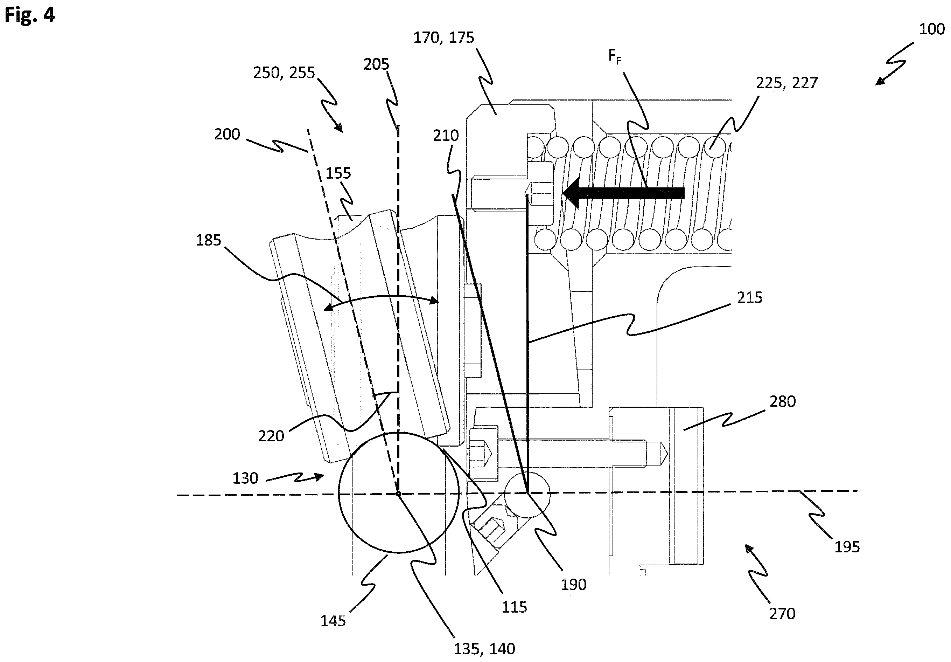

Die erste Rolle 155 und die zweite Rolle 160 sind in Fig. 1 beispielsweise an einem beweglichen Element 170 eines Grundkörpers 180 der Transportvorrichtung 100 rotatorisch gelagert 175. Die rotatorische Lagerung 175, also eine dreh- bzw. schwenkbare Lagerung, ist schematisch anhand des Pfeils angedeutet und wird im Zusammenhang mit Fig. 4 noch detaillierter erläutert. Zusätzlich oder alternativ dazu kann auch die dritte Rolle 165 an einem beweglichen Element 170 des Grundkörpers 180 rotatorisch gelagert 175 sein. Dies ist in den Figuren jedoch nicht dargestellt. Grundsätzlich sind wenigstens die einer Lauffläche zugeordneten Rollen rotatorisch gelagert. Es kann sich dabei auch um eine einzelne Rolle handeln.

Die erste Rolle 155 und die zweite Rolle 160, die rotatorisch 175 am beweglichen Element 170 gelagert sind, sind jeweils ausgelegt mit der Laufschiene 105 zusammenzuwirken, genauer mit der Ausbildung der ersten Lauffläche 115 zusammenzuwirken. Dazu umfasst die erste Lauffläche 115 und die zweite Lauffläche 120 jeweils eine im Wesentlichen abgerundete Fläche 130. Dies ist in Fig. 1 detaillierter erkennbar, gleichwohl die Laufschiene 105 des Transportsystems 335 die abgerundete Fläche 130 an der zweiten Lauffläche 120 ebenfalls aufweist. Das Zusammenwirken der rotatorischen Lagerung 175 der ersten Rolle 155 und der zweiten Rolle 160 mit der im Wesentlichen abgerundeten Fläche 130 der ersten Lauffläche 115 wird anhand der folgenden Figuren noch im Detail erläutert.

Der Grundkörper 180 der Transportvorrichtung 100 ist beispielsweise im Wesentlichen U-förmig ausgebildet und weist eine Basis 285 mit einem ersten Schenkel 290 und einem zweiten Schenkel 295 auf. Hierbei kann der Grundkörper 180 zumindest teilweise an einer Außenseite der Basis 300 und einer Außenseite des ersten Schenkels 305 eine Ausnehmung 360 aufweisen, in der das bewegliche Element 170 angeordnet ist.

Das Transportsystem 335 weist ferner eine Antriebsvorrichtung 270 auf, die eine Mehrzahl an Motormodulen 271 umfasst. Die Motormodule 271 können bogenförmige Motormodule 272 und gerade Motormodule 273 umfassen, wobei die Geometrie der Motormodule 271 beliebig variiert und kombiniert werden kann, ebenso wie die Kontur des gekrümmten Laufschienenabschnitts 1101 und/oder des geraden Laufschienenabschnitts 1102. Die Motormodule 271 sind als Linearmotoren ausgebildet und weisen eine Mehrzahl an Statorzähnen 275 auf. Zumindest um einen Teil der Statorzähne 275 sind nicht dargestellte elektrische Spulen gewickelt, die einzeln und getrennt voneinander bestrombar sind. Auf diese Weise ist es mithilfe der Spulen möglich, ein magnetisches Feld zu erzeugen.

Zudem umfasst die Antriebsvorrichtung 270 eine Mehrzahl an Magneten 280. Die Magneten 280 sind dabei beispielsweise jeweils an einer ersten Innenseite 310 des ersten Schenkels 290 und einer zweiten Innenseite 315 des zweiten Schenkels 295 des Grundkörpers 180 der Transportvorrichtung 100 angeordnet. Die an den genannten Flächen des Grundkörpers 180 der Transportvorrichtung 100 angeordneten Magneten 280 können in Verbindung mit dem seitens der Spulen erzeugten magnetischen Feldes (magnetischen Wanderfeldes) angetrieben werden, ohne dass es weiterer aktiver Antriebselemente auf der Transportvorrichtung 100 bedarf.

Der Stromfluss in den Spulen erzeugt das magnetische Feld für eine Wirkverbindung mit den Magneten 280 der Transportvorrichtung 100. Eine Wirkverbindung beschreibt eine Wechselwirkung des magnetischen Feldes der Spulen mit den Magneten 280 der Transportvorrichtung 100, wodurch die Transportvorrichtung 100 entlang des gekrümmten Laufschienenabschnitts 1101 bzw. entlang des geraden 1102 Laufschienenabschnitts bewegt werden.

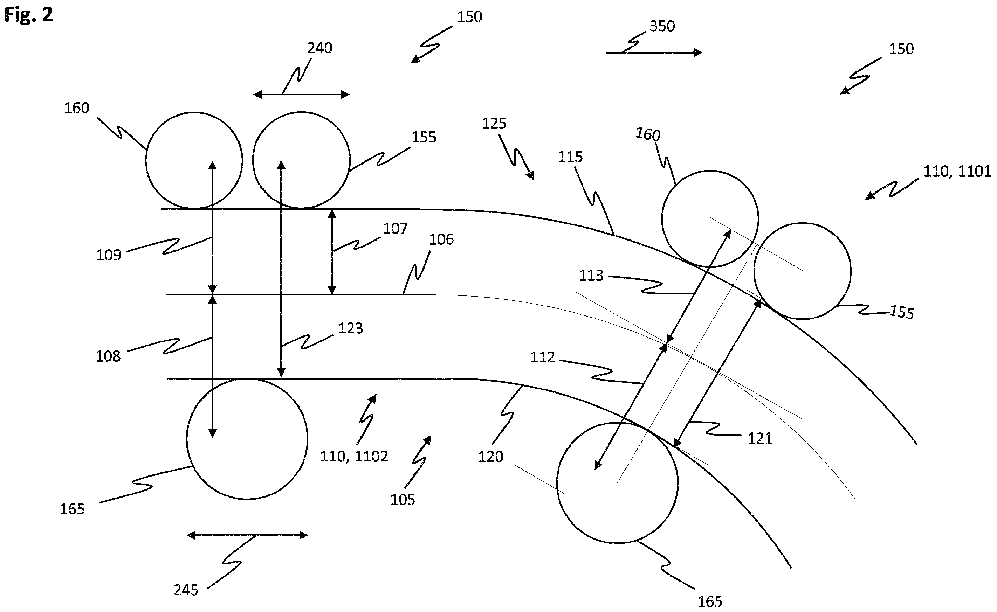

Zur Aufrechterhaltung der Wirkverbindung und der damit verbundenen Anschubkraft zur Führung der Transportvorrichtung 100 wird beispielsweise angenommen, dass die Magneten 280 der Transportvorrichtung 100 bei der Führung der Transportvorrichtung 100 entlang der Laufschiene 105 einer näherungsweise idealen Bahn folgen sollen. Die ideale Bahn kann dabei beispielsweise in der Mitte der Laufschiene 106 liegen, wie sie in Fig. 2 dargestellt ist. Ein Abstand 107 zur Mitte der Laufschiene 106 kann einen ersten Wert A für die gewählte Laufschiene 105 betragen, jeweils für den geraden Laufschienenabschnitt 1102 als auch für den gekrümmten Laufschienenabschnitt 1101.

Die obige Annahme wird durch den Umstand gestützt, dass ein dritter Abstand 108 der dritten Rolle 165 zur Mitte der Laufschiene 106 für den geraden Laufschienenabschnitt 1102 beispielsweise einen zweiten Wert B aufweist, während ein fünfter Abstand 112 der dritten Rolle 165 zur Mitte der Laufschiene 106 für den gekrümmten Laufschienenabschnitt 1101 ebenfalls den zweiten Wert B aufweist. Der dritte Abstand 108 und der vierte Abstand 109 der dritten Rolle 165 zur Mitte der Laufschiene 106 sind damit also konstant im Bereich der gesamten Laufschiene 105. Die einzelne dritte Rolle 165 ist also in der Lage den Abstand 107 zur Mitte der Laufschiene 106 aufrecht zu erhalten und damit die ideale Lage der Bahn der Magneten 280. Aus diesem Grund ist die dritte Rolle 165 an der vorgeschlagenen Transportvorrichtung 100 starr fixiert.

Zwei in Führungsrichtung 350 hintereinander angeordnete Rollen der Transportvorrichtung 100, beispielsweise die erste Rolle 155 und die zweite Rolle 160, sind aufgrund ihrer Geometrie für die Geradeausfahrt (also entlang des geraden Laufschienenabschnitts 1102) optimal angeordnet. In der Kurvenfahrt (also entlang des gekrümmten Laufschienenabschnitts 1101) würden die erste Rolle 155 und die zweite Rolle 160 wegen ihrer Geometrie jedoch die Bahn verlassen wollen und dadurch einen Luftspalt bzw. Spielraum erzeugen. Dies wird auch als sog. Sekanteneffekt bezeichnet.

Die erste Rolle 155 würde beispielsweise aus der Kurve (also dem gekrümmten Laufschienenabschnitt 1101) herausfahren wollen und den Kontakt zur ersten Lauffläche 115 verlieren und die zweite Rolle 160 würde beispielsweise in die Kurve hineinfahren wollen und den Kontakt zur ersten Lauffläche 115 nicht verlieren.

Um den genannten Effekt zu vermeiden und zu gewährleisten, dass die erste Rolle 155 und die zweite Rolle 160 auch bei der Kurvenfahrt Kontakt zur ersten Lauffläche 115 aufweisen, ist die Transportvorrichtung 100 mit dem vorgeschlagenen rotatorisch gelagerten 175 beweglichen Element 170 ausgebildet, das über eine Federeinheit 222 vorspannbar ist. Die gefederte rotatorische Lagerung 175 der ersten Rolle 155 und der zweiten Rolle 160 mithilfe des beweglichen Elements 170, ermöglicht eine Anpassung der Position der ersten Rolle 155 und der zweite Rolle 160 (sowie eine Nachstellung der Vorspannung der Transportvorrichtung 100 im gekrümmten Laufschienenabschnitt 1101).

Die Anpassung der Position der ersten Rolle 155 und der zweiten Rolle 160, erfolgt dabei beispielsweise gemäß der Darstellung in Fig. 2. Der vierte Abstand 109 der ersten Rolle 155 und der zweiten Rolle 160 zur Mitte der Laufschiene 106, bei dem die erste Rolle 155 und die zweite Rolle 160 für den geraden Laufschienenabschnitt 1102 jeweils Kontakt zur ersten Lauffläche 115 aufweisen, hat den zweiten Wert B. Ein sechster Abstand 113 der ersten Rolle 155 und der zweiten Rolle 160 zur Mitte der Laufschiene 105, bei dem, das heißt, die erste Rolle 155 und die zweite Rolle 160 für den gekrümmten Laufschienenabschnitt 1101 jeweils Kontakt zur ersten Lauffläche 115 aufweisen, hat einen dritten Wert C für die gewählte Laufschiene 105. Zur Aufrechterhaltung des Kontakts der beiden Rollen, das heißt, der ersten Rolle 155 und der zweiten Rolle 160, auf der ersten Lauffläche 115 ist für den gekrümmten Laufschienenabschnitt 1101 folglich eine Reduktion des vierten Abstandes 109 der ersten Rolle 155 und der zweiten Rolle 160 zur Mitte der Laufschiene 105 und des sechsten Abstandes 113 der ersten Rolle 155 und der zweiten Rolle 160 zur Mitte der Laufschiene 105 der beiden Rollen, das heißt, der ersten Rolle 155 und der zweiten Rolle 160, erforderlich.

Die Magneten 280 sind in der Regel eher im oberen Bereich der Transportvorrichtung 100 angeordnet, wie im Zusammenhang mit den vorangehenden Figuren erläutert, daher kann also zur Erzielung einer optimalen Wirkverbindung bzw. Anschubkraft der Transportvorrichtung 100 gemäß der obigen Annahme, die Anpassung der Position der Mehrzahl an Rollen 150 vorteilhaft über die Anpassung der Position der ersten Rolle 155 und der zweiten Rolle 160 erfolgen. Im Gegensatz dazu kann die Anschubkraft bei einer rotatorischen Lagerung 175 der dritten Rolle 165 beispielsweise reduziert werden, da die Magneten 280 dann bei einer Anpassung der Position der dritten Rolle 165 von der idealen Bahn über die Mitte der Laufschiene 106 nach unten abrutschen können. Durch das Abrutschen würden die Magneten 280 nicht mehr auf optimaler Höhe für die Wirkverbindung mit den Spulen sitzen (geringerer Überlapp zur Erzeugung des magnetischen Feldes) und sich damit nachteilig auf die Fortbewegung der Transportvorrichtung 100 auswirken.

Die erste Rolle 155, die zweite Rolle 160 und die dritte Rolle 165 in Fig. 2 sind näherungsweise dreieckförmig angeordnet, wie auch in Fig. 1 dargestellt ist. Die erste Rolle 155 und die zweite Rolle 160 weisen beispielsweise jeweils einen ersten Rollen-Durchmesser 240 auf, wobei der erste Rollen-Durchmesser 240 zum Beispiel exemplarisch im Zusammenhang mit der ersten Rolle 155 in Fig. 2 dargestellt ist. Die dritte Rolle 165 weist einen zweiten Rollen-Durchmesser 245 auf. Dabei ist der erste Rollen-Durchmesser 240 beispielsweise kleiner als der zweite Rollen-Durchmesser 245 ausgebildet, da die dritte Rolle 165 die gleiche Last tragen soll wie die erste Rolle 155 und die zweite Rolle 160 gemeinsam tragen müssen. Bei einer Auslegung mit nur zwei oder auch vier Rollen ist der erste Rollen-Durchmesser 240 und der zweite Rollen-Durchmesser 245 dann gleich groß.

Damit die erste Rolle 155, die zweite Rolle 160 und die dritte Rolle 165 immer ausreichend Kontakt zu der ersten Lauffläche 115 und der zweiten Lauffläche 120 des gekrümmten Laufschienenabschnitts 1101 - sowie des geraden Laufschienenabschnitts 1102 - haben, ist eine bestimmte Kraft erforderlich, die den Andruck der ersten Rolle 155, der zweiten Rolle 160 und der dritten Rolle 165 auf die erste Lauffläche 115 beziehungsweise die zweite Lauffläche 120 der Laufschiene 105 sicherstellt.

Die Kraft wird auch als Andruck-, Anpress- bzw. Vorspann- oder Rollenkraft bezeichnet. Die Begriffe sind hierbei jeweils als Synonyme zu verstehen. Um den Kontakt der Rollen zur Lauffläche herzustellen, ist zwar grundsätzlich keine hohe Vorspannkraft notwendig. Damit die Transportvorrichtung aber möglichst steif auf der Laufschiene sitzt, wird ein vergrößerte Vorspannkraft eingesetzt, die gewährleistet, dass der die Transportvorrichtung durch die dynamischen Kräfte beziehungsweise Momente bei der Fahrt oder Arbeitskräfte nicht oder nur geringfügig verkippt. Je fester die Transportvorrichtung mit der Laufschiene Kontakt hat, desto dynamischer beziehungsweise mit mehr Anbaumasse kann die Transportvorrichtung betrieben werden.

Üblicherweise unterscheidet sich die Anpresskraft der Transportvorrichtung 100 auf dem geraden Laufschienenabschnitt 1102 und dem gekrümmten Laufschienenabschnitt 1101. Dies bedeutet, dass die Stabilität bzw. Steifigkeit der Transportvorrichtung 100 auf der Laufschiene 105 nicht konstant ist. Dies kann sich unter Umständen negativ auf das Schwingverhalten bzw. einzustellende Regelparameter der Transportvorrichtung 100 bzw. des Transportsystems 335 auswirken. Ziel ist daher, die Anpresskraft für die gesamte Laufschiene 105, also unabhängig von dem jeweiligen Laufschienenabschnitt 110, näherungsweise konstant zu halten bzw. den Unterschied zu reduzieren.

Mithilfe der vorgeschlagenen Transportvorrichtung 100 mit dem vorgeschlagenen rotatorisch gelagerten 175 beweglichen Element 170, das über eine Federeinheit 222 vorspannbar ist, ist es möglich, den Unterschied der Anpresskraft zwischen dem geraden Laufschienenabschnitt 1102 und dem gekrümmten Laufschienenabschnitt 1101 zu reduzieren (Der Unterschied in der Anpresskraft für den geraden Laufschienenabschnitt 1102und der Anpresskraft für den gekrümmten Laufschienenabschnitt 1101 liegt in der Regel bei ca. 10%). Dabei ist die angegebene Größenordnung so gering, dass es das Regelverhalten der Transportvorrichtung 100 bzw. des Transportsystems 335 nicht beeinflusst. In anderen Worten ausgedrückt heißt das, der Übergang zwischen geradem Laufschienenabschnitt 1102 und gekrümmten Laufschienenabschnitt 1101 wirkt sich basierend auf der vorgeschlagenen Anordnung nicht mehr negativ auf die Stabilität der Transportvorrichtung 100 aus.

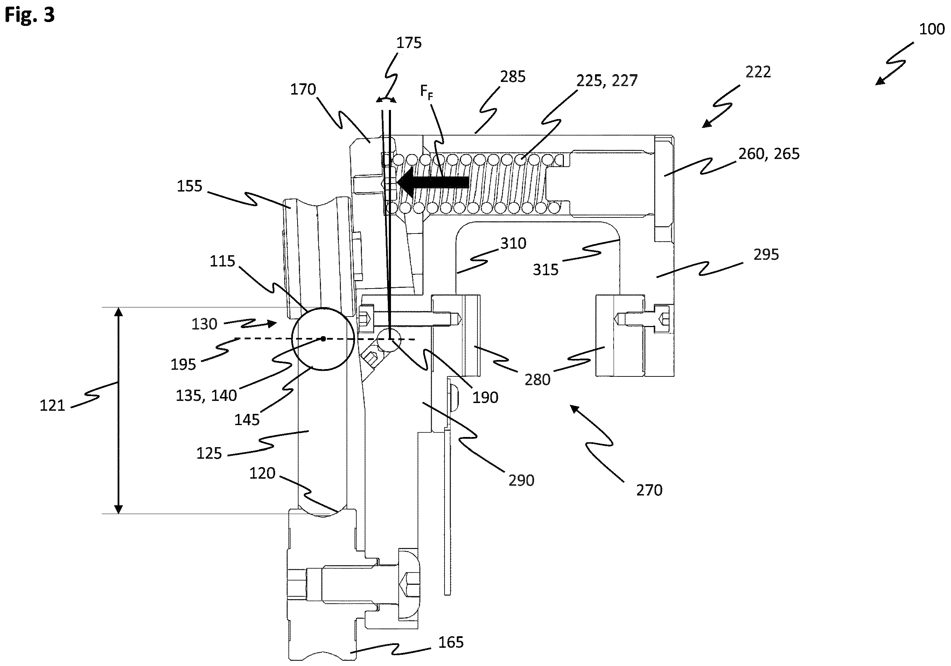

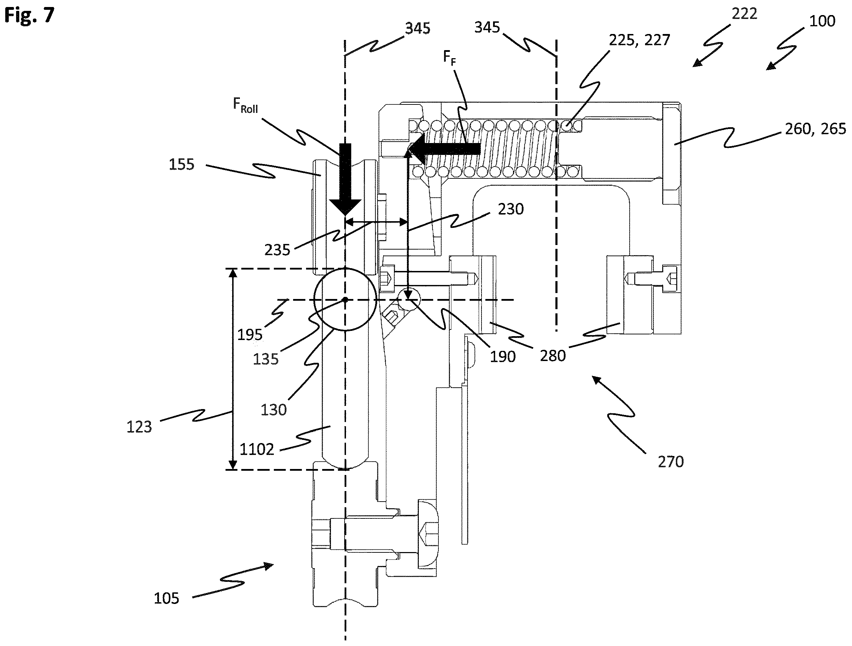

Im Folgenden werden die Fig. 3 und 7 miteinander beschrieben, da diese jeweils eine Schnittansicht der ersten Transportvorrichtung 101 bzw. der bau- und komponentengleichen zweiten Transportvorrichtung 102 zur besseren Übersichtlichkeit der einzelnen Komponenten zeigen.

Im Unterschied zu Fig. 3, bei der die erste Transportvorrichtung 101 beispielsweise entlang des gekrümmten Laufschienenabschnitts 1101 geführt wird, wird die erste Transportvorrichtung 101 bzw. die zweite Transportvorrichtung 102 in Fig. 7 entlang des geraden Laufschienenabschnitts 1102 geführt.

In Fig. 3 sind jeweils die erste Lauffläche 115 und die zweite Lauffläche 120 des gekrümmten Laufschienenabschnitts 1101 dargestellt. Diese weisen jeweils die im Wesentlichen abgerundete Fläche 130 und jeweils einen Führungsmittelpunkt 135 auf. Der Führungsmittelpunkt 135 bildet ist als geometrischer Kreismittelpunkt 140 zu verstehen, dessen Kreisfläche 145 jeweils näherungsweise die abgerundete Fläche 130 der ersten Lauffläche 115 oder die abgerundete Fläche 130 der zweiten Lauffläche 120 einschließt. Im gezeigten Beispiel ist der Führungsmittelpunkt 135, also der Kreismittelpunkt 140 samt der Kreisfläche 145 nur für die erste Lauffläche 115 dargestellt. Es versteht sich jedoch, dass dies nur aus Übersichtlichkeitsgründen erfolgte und keine Einschränkung darstellt.

Im gezeigten Ausführungsbeispiel sind die erste Rolle 155 und die zweite Rolle 160 rotatorisch 175 an dem beweglichen Element 170 des Grundkörpers 180 gelagert. Die drehbare bzw. rotatorische Lagerung 175 ist schematisch mithilfe des beidseitigen Pfeils dargestellt in Fig. 3. Das bewegliche Element 170 kann hierzu beispielsweise als ein Scharnierblock ausgebildet sein. Es besteht weiter auch die Möglichkeit, wie bereits erläutert, nur eine Rolle, beispielsweise die erste Rolle 115, die auf der ersten Lauffläche 115 geführt wird, zu verwenden. Auch können alternativ weitere Rollen vorgesehen sein.

Wie bereits erläutert, kann die dritte Rolle 165 gleichermaßen an einem beweglichen Element 170 rotatorisch 175 gelagert sein. Daher gelten die nachfolgenden Erläuterungen gleichermaßen für die dritte Rolle 165 auf der zweiten Lauffläche 120 beziehungsweise auch weiteren möglichen Rollen auf der zweite Lauffläche 120.

Die erste Rolle 155 und die zweite Rolle 160 sind aufgrund der rotatorischen Lagerung 175 jeweils für den gekrümmten Laufschienenabschnitt 1101 bzw. für den Übergang von einem geraden Laufschienenabschnitt 1102 zu einem gekrümmten Laufschienenabschnitt 1101 ausgelegt, eine Schwenkbewegung 185 entlang der im Wesentlichen abgerundeten Fläche 130 der ersten Lauffläche 115 auszuführen, um weiterhin den Kontakt mit der ersten Rolle 155 und der zweiten Rolle 160 auf der Laufschiene 105 entlang eines gekrümmten Laufschienenabschnitts 1101 bzw. beim Übergang von einem geraden Laufschienenabschnitt 1102 zu einem gekrümmten Laufschienenabschnitt 1101 auf der ersten Lauffläche 115 der Laufschiene 105 aufrecht zu erhalten (sowie zur Nachstellung der Vorspannung), wie oben erläutert worden ist. Die Schwenkbewegung 185 ist detaillierter in Fig. 4 dargestellt.

Eine Drehachse 190 des beweglichen Elements 170, also eine Drehachse 190 des als beispielsweise Scharnierblock ausgebildeten beweglichen Elements 170, und der Führungsmittelpunkt 135 sind in den Fig. 3 und 7 im Wesentlichen auf gleicher Höhe 195 angeordnet. Die näherungsweise Anordnung auf gleicher Höhe 195 ist mithilfe der gestrichelten Linie angedeutet. Näherungsweise auf gleicher Höhe 195 kann dabei auch näherungsweise in einer gemeinsamen Ebene liegend verstanden werden.

Beispielsweise kann die Größenordnung in der Differenz in der Höhenanordnung der Drehachse 190 und des Führungsmittelpunkts 135 bis etwa 1 mm betragen.

Die rotatorische bzw. drehbare Lagerung 175 des beweglichen Elements 170 wird also über die Drehachse 190 realisiert. Die Drehachse 190 ist beispielsweise in den Grundkörper 180 der Transportvorrichtung 100 integrierbar. Vorteilhaft an der Anordnung der Drehachse 190 und des Führungsmittelpunkts 135 im Wesentlichen auf gleicher Höhe 195 ist dabei, dass die Stabilität der Transportvorrichtung 100 auf der Laufschiene 105 auch bei einer Schwenkbewegung 185 der ersten Rolle 155 und der zweiten Rolle 160 entlang der im Wesentlichen abgerundeten Fläche 130 der ersten Lauffläche 115 der Laufschiene 105 weiterhin gewährleistet ist. Eine Schwenkbewegung 185 kann dabei auch ein Ein- bzw. Ausfedervorgang der Transportvorrichtung 100 sein.

Grund dafür ist, dass für die Anordnung der Drehachse 190 und des Führungsmittelpunkts 135 näherungsweise auf gleicher Höhe 195, ein mögliches Drehmoment der Transportvorrichtung 100 bei einer Schwenkbewegung 185 der ersten Rolle 155 und der zweiten Rolle 160 reduziert wird. Das Drehmoment wird reduziert und die Transportvorrichtung 100 kippt bei der genannten Bewegung nicht um, sondern es ist eine näherungsweise ideale Parallelausrichtung 345 der Transportvorrichtung 100 und der Laufschiene 105 auf der gesamten Bahn 340 gegeben.

Die Transportvorrichtung 100 ist insbesondere mithilfe der obenstehenden Anordnung der Drehachse 190 sowie des Führungsmittelpunkts 135 ausgelegt, die oben genannte Anpassung der Position der ersten Rolle 155 und der zweiten Rolle 160 für den Übergang von einem geraden Laufschienenabschnitt 1102 zu einem gekrümmten Laufschienenabschnitt 1101 vorteilhaft millionenfach wiederholgenau auszuführen.

Das bewegliche Element 170, also der Scharnierblock, ist über die Federeinheit 222 vorgespannt, wobei die Federeinheit 222 an das bewegliche Element 170 angrenzt, um mit dem beweglichen Element 170 zusammen zu wirken. Die Federeinheit 222 umfasst dazu ein Federelement 225, das vorzugsweise als eine Schraubendruckfeder 227 ausgebildet ist und ein Spannelement 260, das vorzugsweise als eine Spannschraube 265 ausgebildet ist. Das Spannelement 260, also die Spannschraube 265 dient zur Vorspannung des Federelements 225, um eine Federkraft F_{F} bereitzustellen und die Transportvorrichtung 100 auf der Laufschiene 105 vorzuspannen.

Die Federkraft F_{F} wird über das bewegliche Element 170, also den Scharnierblock, an die erste Rolle 155 und die zweite Rolle 160 jeweils in Form einer Rollenkraft F_{Roll} übertragen. Die Rollenkraft F_{Roll} kann beispielsweise die Kraft bezeichnen, die auf die erste Rolle 155 und die zweite Rolle 160 beim Kontakt mit der ersten Lauffläche 115 der Laufschiene 105 wirkt. Dabei teilt sich die Rollenkraft F_{Roll} auf die erste Rolle 155 und die zweite Rolle 160 gleichmäßig auf, während sie auf die dritte Rolle 165 einzeln wirkt. Die Rollenkraft F_{Roll} ist in der Darstellung jeweils nur schematisch für die erste Rolle 155 eingezeichnet.

Vorteilhaft an der Verwendung einer Schraubendruckfeder 227 als Federelement 225 ist insbesondere der Umstand, dass diese kaum verschleißanfällig ist bzw. dazu beiträgt die Verschleißanfälligkeit des Transportsystems 335 bzw. der Transportvorrichtung 100 zu reduzieren. Eine Schraubendruckfeder 227 weist eine hohe Dauerschwingfestigkeit auf und kann daher optimal für das kurven- und verschleißbedingte Nachstellen der Position der ersten Rolle 155 und der zweiten Rolle 160 der Transportvorrichtung 100 eingesetzt werden. Die Feder kann relativ weich sein, also eine geringe Steifigkeit aufweisen. Die geringe Steifigkeit sorgt dafür, dass sich die Federkraft bei Veränderung der Federlänge beispielsweise beim Übergang von gekrümmter Laufschiene 110 zu gerader Laufschiene 111 nur geringfügig ändert. Das führt dazu das sich die Transportvorrichtung 110 auf der Bahn konstant verhält. Ferner kann eine kompakte Schraubendruckfeder 227 eingesetzt werden, um vorteilhaft Bauraum bei der Konstruktion der Transportvorrichtung 100 und des Transportsystems 335 einzusparen.

Alternativ zur Verwendung einer Schraubendruckfeder 227 wäre beispielsweise auch eine Tellerfeder denkbar, die sehr kompakt ist und ebenfalls eine große Federkraft F_{F} erzeugen kann. Ferner sind weitere alternative Federelemente oder elastische Elemente denkbar, die die oben genannten Eigenschaften aufweisen.

In Fig. 7 weisen das Federelement 225 und die Drehachse 190 einen ersten Abstand 230 zueinander auf. Die erste Rolle 155 und die zweite Rolle 160, die jeweils rotatorisch 175 am beweglichen Element 170 gelagert sind, und die Drehachse 190 weisen einen zweiten Abstand 235 auf. Dabei ist der erste Abstand 230 größer als der zweite Abstand 235 ausgebildet.

Dies bewirkt unter Ausnutzung des Hebelgesetzes, dass die aus der Federkraft F_{F} resultierende Rollenkraft F_{Roll} zum Andruck der Rollen um den Faktor erster Abstand 230 geteilt durch zweiter Abstand 235 verstärkt wird. Der genannte Faktor kann beispielsweise einen Wert größer 2,0 aufweisen. Beispielsweise kann die Federkraft F_{F} im genannten Beispiel etwa 100 N betragen und die Rollenkraft F_{Roll} aufgrund des Hebelgesetzes dann beispielsweise 200 N, wobei sich die Rollenkraft F_{Roll} auf die erste Rolle 155 und die zweite Rolle 160 gleichmäßig aufteilt (F_{Roll} = 200/2 N). Auf die dritte Rolle 165 kann beispielsweise die genannte Rollenkraft F_{Roll} = 200 N wirken. Unter Ausnutzung des Hebelgesetzes für die dargestellte Anordnung kann daher vorteilhaft ein verhältnismäßig kleineres Federelement 225 in Form einer Schraubendruckfeder 227 verwendet werden. Es versteht sich, dass obige Zahlenwerte rein exemplarischer Natur und nicht einschränkend zu verstehen sind.

Die oben genannte Anpress-, Andruck-, Vorspann- oder Rollenkraft resultiert also vorteilhaft aus der eingezeichneten Federkraft F_{F}. Mithilfe der Federeinheit 222 werden demnach sowohl die erste Rolle 155 und die zweite Rolle 160, die an dem beweglichen Element 170 fixiert sind, als auch die am Grundkörper 180 angebrachte dritte Rolle 165 der Transportvorrichtung 100 vorgespannt.

Die oben genannten Magneten 280 der Antriebsvorrichtung 270 sind jeweils an einer ersten Innenseite 310 des ersten Schenkels 290 und an einer zweiten Innenseite 315 des zweiten Schenkels 295 des U-förmigen Grundkörpers 180 der Transportvorrichtung 100 angeordnet.

Fig. 4 zeigt eine vergrößerte Darstellung der Transportvorrichtung 100 in Fig. 3, um den Vorgang der Schwenkbewegung 185 exemplarisch für die erste Rolle 155 näher zu erläutern. Auch für die zweite Rolle 160 gilt nachstehende Erläuterung sowie für die dritte Rolle 165, sofern diese ebenfalls rotatorisch 175 gelagert ist (im Zusammenhang mit der zweiten Lauffläche 120 der Laufschiene 105). Die erste Rolle 155 und die zweite Rolle 160, führen die Schwenkbewegung 185 entlang der im Wesentlichen abgerundeten Fläche 130 der ersten Lauffläche 115 der Laufschiene 105, bei einem Übergang von einem geraden Laufschienenabschnitt 1102 zu einem gekrümmten Laufschienenabschnitt 1101 (oder von einem gekrümmten Laufschienenabschnitt 1101 zu einem geraden Laufschienenabschnitt 1102), bzw. bei der Führung entlang des gekrümmten Laufschienenabschnitts 1101, aus, um den Kontakt mit der ersten Lauffläche 115 aufrechtzuerhalten.

Wie oben erläutert worden ist, kann - unter Durchführung der Schwenkbewegung 185 - die Position der ersten Rolle 155 und der zweiten Rolle 160 angepasst werden, also der vierte Abstand 109 der ersten Rolle 155 und der zweiten Rolle 160 zur Mitte 106 der Laufschiene 105 kann auf den sechsten Abstand 113 der ersten Rolle 155 und der zweiten Rolle 160 zur Mitte 106 der Laufschiene 105 reduziert werden (sowie die Vorspannung nachgestellt werden).

Die von der Federeinheit 222 bereitgestellte Federkraft F_{F} wird über das bewegliche Element 170 und dessen Drehachse 190 in die Schwenkbewegung 185 der ersten Rolle 155 überführt, also in deren Drehbewegung - ähnlich dem Prinzip einer Zange - entlang der im Wesentlichen abgerundeten Fläche 130 der ersten Lauffläche 115 der Laufschiene 105. Die Schwenkbewegung 185 erfolgt dabei beispielsweise weg vom ersten Schenkel 290 des Grundkörpers 180 der Transportvorrichtung 100. Im dargestellten Beispiel ist die Fläche der ersten Lauffläche 115 abgerundet. In der zweidimensionalen Darstellung kann die erste Lauffläche 115 beispielsweise ein Kreissegment bilden. Ein Profil 250 der ersten Rolle 155 kann beispielsweise einem gotischen Profil 255 entsprechen, um eine optimale Schenkbewegung 185 entlang der abgerundeten Fläche 130 auszuführen. Darüber hinaus kann die erste Rolle 155 auch ein abgerundetes Profil, ein V-Nut (Prisma) Profil oder ein alternatives Profil aufweisen (nicht dargestellt), dass eine Schwenkbewegung 185 entlang der abgerundeten Fläche 130 der ersten Lauffläche 115 erlaubt.

Die erste Rolle 155 definiert bei der Schwenkbewegung 185 eine Schwenkebene 200, die gegenüber einer Fahrtebene 205 geneigt orientiert 220 ist. Beispielsweise können die Schwenkebene 200 und die Fahrtebene 205 einen Winkel α miteinander einschließen, wobei der Winkel beispielsweise einen spitzen Winkel α bildet. Die Fahrtebene 205 kann dabei beispielsweise im Wesentlichen parallel zu einer Führungsrichtung 350 der ersten Rolle 155 orientiert sein. Die Führungsrichtung 350 kann beispielsweise die Richtung angeben, in der die erste Rolle 155 entlang der Laufschiene 105 geführt wird, also deren Rollrichtung beispielsweise entsprechen. In engen Grenzen kann die Schwenkbewegung 185 daher quer zur Rollrichtung der ersten Rolle 155 erfolgen. Eine erste Parallelverschiebung 210 der Schwenkebene 200 sowie eine zweite Parallelverschiebung 215 der Fahrtebene 205 sind in Fig. 4 an der Stelle der Drehachse 190 des beweglichen Elements 170 eingezeichnet.

Im Falle der fixierten Lagerung der dritten Rolle 165 und der rotatorischen Lagerung 175 der ersten Rolle 155 und der zweiten Rolle 160, ist die dritte Rolle 165 für den gekrümmten Laufschienenabschnitt 1101 beispielsweise parallel zur Fahrtebene 205 orientiert, während die erste Rolle 155 und die zweite Rolle 160 für den gekrümmten Laufschienenabschnitt 1101 beispielsweise parallel zur Schwenkebene 200 orientiert sind.

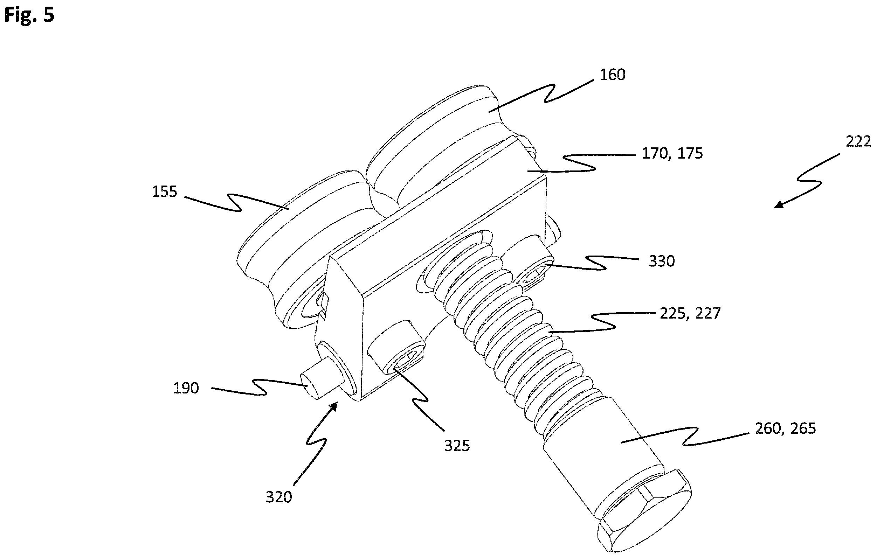

Fig. 5 zeigt eine vergrößerte perspektivische Darstellung des in den Fig. 3 und 4 dargestellten beweglichen Elements 170, an dem die erste Rolle 155 und die zweite Rolle 160 der Transportvorrichtung 100 rotatorisch 175 gelagert sind, samt der Federeinheit 222. Die Federeinheit 222 weist das als Spanschraube 265 ausgebildete Spannelement 260, sowie das als Schraubendruckfeder 227 ausgebildete Federelement 225 auf.

Insbesondere das Federelement 225 grenzt zum Zwecke der Vorspannung an das als Scharnierblock ausgebildete bewegliche Element 170 an bzw. mündet in das als Scharnierblock ausgebildete bewegliche Element 170. Die erste Rolle 155 ist über ein erstes Fixierelement 325 an dem beweglichen Element 170 befestigt. Die zweite Rolle 160 ist über ein zweites Fixierelement 330 an dem beweglichen Element 170 befestigt. Dabei können das erste Fixierelement 325 sowie das zweite Fixierelement 330 beispielsweise jeweils als Schrauben ausgebildet sein. Alternativ wären auch Bolzen oder ähnliche Fixierelemente denkbar.

Das bewegliche Element 170 weist quer zum angrenzenden Federelement 225 die Drehachse 190 auf. Die Drehachse 190 kann beispielsweise in Form eines Zylinderstifts ausgebildet sein. Da das bewegliche Element 170 bei jedem Übergang von einem geraden Laufschienenabschnitt 1102 zu einem gekrümmten Laufschienenabschnitt 1101 sowie bei jedem Übergang vom gekrümmten Laufschienenabschnitt 1101 zum geraden Laufschienenabschnitt 1102 jeweils eine Schwenkbewegung 185 (also eine Drehbewegung) um die Drehachse 190 ausführt, kann das bewegliche Element 170 gelagert 320 sein. Zur Verlängerung der Lebensdauer der Drehachse 190 kann die Lagerung 320 des beweglichen Elements 170 beispielsweise mit einem oder mehreren Gleitlagern um den Zylinderstift als Drehachse 190 erfolgen (nicht dargestellt).

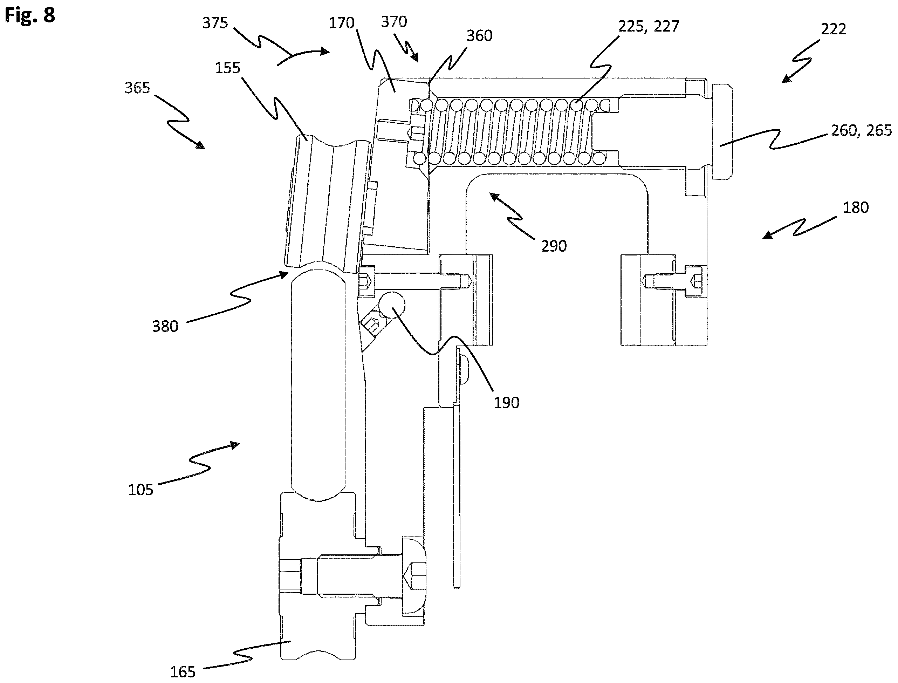

Fig. 8 zeigt eine schematische Darstellung eines Entnahmevorgangs 365 der Transportvorrichtung 100 von der Laufschiene 105. Die vorgeschlagene Transportvorrichtung 100 bzw. das vorgeschlagene Transportsystem 335 erlauben ein besonders einfaches Entfernen der Transportvorrichtung 100 von der Laufschiene 105 (sowie ein besonders einfaches Aufsetzen der Transportvorrichtung 100 auf die Laufschiene 105, das sog. Aufgleisen), wie im Folgenden dargelegt wird. Für den Entnahmevorgang 365 muss das Spannelement 260 der Federeinheit 222, also die Spannschraube 265, so weit gelöst werden, dass sich das Federelement 225, also die Schraubendruckfeder 227, entspannt.

Entspannt sich das Federelement 225, so wirkt keine Federkraft F_{F} mehr und das bewegliche Element 170, also der Scharnierblock, kann in Richtung 375 des ersten Schenkels 290 soweit verdreht werden, dass das bewegliche Element 170 in der Ausnehmung 360 am Grundkörper 180 anliegt 370. Durch die Verdrehung und das Anliegen 370 des beweglichen Elements 170, werden die erste Rolle 155 und die zweite Rolle 160 der Transportvorrichtung 100 von der ersten Lauffläche 115 angehoben, sodass zwischen der im Wesentlichen gekrümmten Fläche 130 der ersten Lauffläche 115 und der ersten Rolle 155 und der zweiten Rolle 160 ein Spalt 380 entsteht. Der Spalt 380 ist insbesondere ein Luftspalt.

Der Spalt 380 ist dabei ausreichend groß ausgebildet, um zunächst die erste Rolle 155 und die zweite Rolle 160 von der ersten Lauffläche 115 und dann die dritte Rolle 165 von der zweiten Lauffläche 120 anzuheben (nicht dargestellt), und somit die Transportvorrichtung 100 von der Laufschiene 105 entnehmen zu können. Es versteht sich, dass ein Einsetzvorgang (das Aufgleisen) der Transportvorrichtung 100 auf die Laufschiene 105 (nicht dargestellt) in umgekehrter Reihenfolge durchgeführt werden kann, also beispielsweise beginnend mit dem Aufsetzen der fixierten dritten Rolle 165 auf die zweite Lauffläche 120.

Aufgrund der Positionierung und Konstruktion der Federeinheit 222 und dem Zusammenwirken mit dem beweglichen Element 170 ist es somit möglich, die Transportvorrichtung 100 besonders einfach von der Laufschiene 105 zu entnehmen 365 bzw. aufzusetzen (aufzugleisen). Denn wie oben erläutert worden ist, ist für den Entnahmevorgang 365 kein zusätzlicher Schritt erforderlich, wie beispielsweise die Verwendung einer Schienenschleuse, also eines speziellen, nur für den Entnahme- oder Einsetzvorgang der Transportvorrichtung 100 zugeschnittenen Laufschienenabschnitts 110, der in der Regel eine Dejustage zumindest eines Bereichs der Laufschiene 105 für den Einsatz der Schienenschleuse erfordert. Eine solche Dejustage der Lauschiene 105 kann mithilfe der vorgeschlagenen Transportvorrichtung 100 sowie des vorgeschlagenen Transportsystems 335 vorteilhaft vermieden werden.

Die Erfindung wurde im Detail durch bevorzugte Ausführungsbeispiele beschrieben.

Anstelle der beschriebenen Ausführungsbeispiele sind weitere Ausführungsbeispiele denkbar, welche weitere Abwandlungen oder Kombinationen von beschriebenen Merkmalen aufweisen können. Die Erfindung ist aus diesem Grund nicht durch die offenbarten Beispiele ein-geschränkt, da vom Fachmann andere Variationen daraus abgeleitet werden können, ohne dabei den durch die Ansprüche definierten Schutzumfang der Erfindung zu verlassen.

### Bezugszeichenliste

- 100: Transportvorrichtung
- 101: erste Transportvorrichtung
- 102: zweite Transportvorrichtung
- 103: dritte Transportvorrichtung
- 105: Laufschiene
- 106: Mitte der Laufschiene
- 107: Abstand zur Mitte der Laufschiene
- 108: dritter Abstand der dritten Rolle zur Mitte der Laufschiene
- 109: vierter Abstand der ersten Rolle und der zweiten Rolle zur Mitte der Laufschiene
- 110: Laufschienenabschnitt
- 1101: gekrümmter Laufschienenabschnitt
- 1102: gerader Laufschienenabschnitt
- 112: fünfter Abstand der dritten Rolle zur Mitte der Laufschiene
- 113: sechster Abstand der ersten Rolle und der zweiten Rolle zur Mitte der Laufschiene
- 115: erste Lauffläche
- 120: zweite Lauffläche
- 121: erster Laufflächenabstand
- 123: zweiter Laufflächenabstand
- 125: gegenüberliegende Seiten
- 130: im Wesentlichen abgerundete Fläche
- 135: Führungsmittelpunkt
- 140: geometrischer Kreismittelpunkt
- 145: Kreisfläche
- 150: Mehrzahl an Rollen
- 151: Anordnung
- 155: erste Rolle
- 160: zweite Rolle
- 165: dritte Rolle
- 170: bewegliches Element
- 175: rotatorische Lagerung
- 180: Grundkörper
- 185: Schwenkbewegung
- 190: Drehachse
- 195: im Wesentlichen auf gleicher Höhe
- 200: Schwenkebene
- 205: Fahrtebene
- 210: erste Parallelverschiebung Schwenkebene
- 215: zweite Parallelverschiebung Fahrtebene
- 220: geneigt
- 222: Federeinheit
- 225: Federelement
- 227: Schraubendruckfeder
- 230: erster Abstand
- 235: zweiter Abstand
- 240: erster Rollen-Durchmesser
- 245: zweiter Rollen-Durchmesser
- 250: Profil
- 255: gotisches Profil
- 260: Spannelement
- 265: Spannschraube
- 270: Antriebsvorrichtung
- 271: Mehrzahl an Motormodulen
- 272: bogenförmiges Motormodul
- 273: gerades Motormodul
- 275: Statorzähne
- 280: Magneten
- 285: Basis
- 290: erster Schenkel
- 295: zweiter Schenkel
- 300: Außenseite der Basis
- 305: Außenseite des ersten Schenkels
- 310: erste Innenseite des ersten Schenkels
- 315: zweite Innenseite des zweiten Schenkels
- 320: Lagerung des beweglichen Elements
- 325: erstes Fixierelement
- 330: zweites Fixierelement
- 335: Transportsystem
- 340: geschlossene Bahn
- 345: Parallelausrichtung
- 350: Führungsrichtung
- 355: Rollendrehachse
- 360: Ausnehmung
- 365: Entnahmevorgang
- 370: Anliegen
- 375: in Richtung des ersten Schenkels hin
- 380: Spalt
- F_{F}: Federkraft
- F_{Roll}: Rollenkraft
- α: Winkel

## Patentansprüche

1. Transportsystem (335), umfassend:
zumindest eine Laufschiene (105) mit zumindest einem Laufschienenabschnitt (110) und zumindest einer beweglichen Transportvorrichtung (100), die entlang des zumindest einen Laufschienenabschnitts (110) geführt wird,
wobei der Laufschienenabschnitt (110) eine erste Lauffläche (115) aufweist,
wobei die erste Lauffläche (115) eine im Wesentlichen abgerundete Fläche (130) aufweist und einen Führungsmittelpunkt (135) umfasst,
wobei der Führungsmittelpunkt (135) im Wesentlichen einen geometrischen Kreismittelpunkt (140) bildet, dessen Kreisfläche (145) näherungsweise die abgerundete Fläche (130) der ersten Lauffläche (115) einschließt,
wobei die Transportvorrichtung (100) zumindest eine erste Rolle (155), die drehbar an der ersten Lauffläche (115) anliegt, umfasst,
wobei die erste Rolle (155) rotatorisch (175) an zumindest einem beweglichen Element (170) eines Grundkörpers (180) der Transportvorrichtung (100) gelagert ist, um eine Schwenkbewegung (185) entlang der im Wesentlichen abgerundeten Fläche (130) der ersten Lauffläche (115) auszuführen,
**dadurch gekennzeichnet, dass**
eine Drehachse (190) des beweglichen Elements (170) für die Schwenkbewegung (185) und der Führungsmittelpunkt (135) im Wesentlichen auf gleicher Höhe (195) angeordnet sind.

2. Transportsystem (335) nach Anspruch 1,
wobei die Laufschiene (105) zumindest einen gekrümmten Laufschienenabschnitt (1101), der die erste Lauffläche (115) und eine zweite Lauffläche (120) aufweist, die an gegenüberliegenden Seiten (125) des gekrümmten Laufschienenabschnitts (1101) angeordnet sind, umfasst,
wobei die erste Lauffläche (115) und die zweite Lauffläche (120) jeweils die im Wesentlichen abgerundete Fläche (130) aufweisen und jeweils den Führungsmittelpunkt (135) umfassen,
wobei der Führungsmittelpunkt (135) jeweils im Wesentlichen den geometrischen Kreismittelpunkt (140) bildet, dessen Kreisfläche (145) jeweils näherungsweise die abgerundete Fläche (130) der ersten Lauffläche (115) oder die abgerundete Fläche (130) der zweiten Lauffläche (120) einschließt,
wobei die Transportvorrichtung (100) zur Führung eine Mehrzahl an Rollen (150) aufweist,
wobei zumindest die erste Rolle (155) und eine zweite Rolle (160) jeweils drehbar an der ersten Lauffläche (115) anliegen und zumindest eine dritte Rolle (165) drehbar an der zweiten Lauffläche (120) anliegt,
wobei die erste Rolle (115) und die zweite Rolle (120) und/oder die dritte Rolle (165) rotatorisch (175) an zumindest einem beweglichen Element (170) eines Grundkörpers (180) der Transportvorrichtung (100) gelagert ist,
wobei die erste Rolle (155) und die zweite Rolle (160) und/oder die dritte Rolle (165), die jeweils rotatorisch (175) am beweglichen Element (170) gelagert ist, jeweils ausgelegt ist, eine Schwenkbewegung (185) entlang der im Wesentlichen abgerundeten Fläche (130) der ersten Lauffläche (115) auszuführen und/oder eine Schwenkbewegung (185) entlang der im Wesentlichen abgerundeten Fläche (130) der zweiten Lauffläche (120) auszuführen, und
wobei eine Drehachse (190) des beweglichen Elements (170) und der Führungsmittelpunkt (135) im Wesentlichen auf gleicher Höhe (195) angeordnet sind.

3. Transportsystem (335) nach Anspruch 1 oder 2,
wobei die erste Rolle (155) bei der Schwenkbewegung (185) jeweils eine Schwenkebene (200) definiert, die gegenüber einer Fahrtebene (205), die im Wesentlichen parallel zu einer Führungsrichtung (350) der ersten Rolle (155) geneigt (220) orientiert ist.

4. Transportsystem (335) nach einem der Ansprüche 1 bis 3,
wobei das bewegliche Element (170) zur rotatorischen Lagerung (175) über zumindest eine Federeinheit (222) vorgespannt ist, die an das bewegliche Element (170) angrenzt, wobei die Federeinheit (222) ein Federelement (225) aufweist.

5. Transportsystem (335) nach Anspruch 4,
wobei das Federelement (225) und die Drehachse (190) einen ersten Abstand (230) zueinander aufweisen,
wobei die erste Rolle (155), die rotatorisch (175) am beweglichen Element (170) gelagert ist, und die Drehachse (190) einen zweiten Abstand (235) zueinander aufweisen,
wobei der erste Abstand (230) größer als der zweite Abstand (235) ausgebildet ist.

6. Transportsystem (335) nach Anspruch 4 oder 5,
wobei die Federeinheit (222) ferner ein Spannelement (260), das insbesondere als Spannschraube (265) ausgebildet ist, aufweist,
wobei das Spannelement (260) ausgelegt ist, das Federelement (225), das insbesondere als eine Schraubendruckfeder (227) ausgebildet ist, vorzuspannen.

7. Transportsystem (335) nach einem der vorangehenden Ansprüche,
aufweisend eine Antriebsvorrichtung (270) zum Antrieb der Transportvorrichtung (100), die Motormodule mit Spulen, die entlang der Laufschiene (105) ausgebildet und einzeln bestrombar sind, und Magneten (280), die an der wenigstens einen Transportvorrichtung (100) angeordnet sind, umfasst,
wobei die Spulen ein magnetisches Feld für eine Wirkverbindung mit den Magneten (280), die an der wenigstens einen Transportvorrichtung (100) angeordnet sind, erzeugen, und wobei die wenigstens eine Transportvorrichtung (100) durch die Wirkverbindung in Bewegung versetzt wird.

8. Transportsystem (335) nach Anspruch 7,
wobei der Grundkörper (180) der Transportvorrichtung (100) im Wesentlichen U-förmig ausgebildet ist und eine Basis (285) mit einem ersten Schenkel (290) und einem zweiten Schenkel (295) aufweist,
wobei der Grundkörper (180) zumindest teilweise an einer Außenseite der Basis (300) und einer Außenseite des ersten Schenkels (305) eine Ausnehmung (360) aufweist, in der das zumindest eine bewegliche Element (170) angeordnet ist,
wobei das Federelement (225) im Bereich der Basis (285) angeordnet ist, und
wobei die Magneten (280) der Antriebsvorrichtung (270) jeweils an einer ersten Innenseite (310) des ersten Schenkels (290) und an einer zweiten Innenseite (315) des zweiten Schenkels (295) des U-förmigen Grundkörpers (180) angeordnet sind.

## Claims

1. A transport system (335), comprising:
at least one running rail (105) having at least one running rail section (110) and at least one movable transport device (100), which is guided along the at least one running rail section (110),
wherein the running rail section (110) comprises a first running surface (115),
wherein the first running surface (115) comprises a substantially rounded surface (130) and includes a guide center (135),
wherein the guide center (135) essentially forms a geometric circle center (140), the circular surface (145) of which approximately encloses the rounded surface (130) of the first running surface (115),
wherein the transport device (100) comprises at least a first roller (155) which rotatably abuts on the first running surface (115),
wherein the first roller (155) is rotatably (175) mounted at at least one movable element (170) of a base body (180) of the transport device (100) in order to carry out a pivoting movement (185) along the substantially rounded surface (130) of the first running surface (115),
**characterized in that**
a rotational axis (190) of the movable element (170) and the guide center (135) are arranged substantially at the same height (195) for the pivoting movement (185).

2. The transport system (335) according to claim 1,
wherein the running rail (105) comprises at least one curved running rail section (1101) comprising the first running surface (115) and a second running surface (120) disposed on opposite sides (125) of the curved running rail section (1101),
wherein the first running surface (115) and the second running surface (120) each comprise the substantially rounded surface (130) and each comprise the guide center (135),
wherein the guide center (135) in each case essentially forms the geometric circle center (140), the circular surface (145) of which in each case approximately encloses the rounded surface (130) of the first running surface (115) or the rounded surface (130) of the second running surface (120),
wherein the transport device (100) comprises a plurality of rollers (150) for guidance,
wherein at least the first roller (155) and a second roller (160) each rotatably abut on the first running surface (115) and at least a third roller (165) rotatably abuts on the second running surface (120),
wherein the first roller (115) and the second roller (120) and/or the third roller (165) are rotatably (175) mounted on at least one movable element (170) of a base body (180) of the transport device (100),
wherein the first roller (155) and the second roller (160) and/or the third roller (165), which are each rotatably (175) mounted at the movable element (170), are each embodied to carry out a pivoting movement (185) along the substantially rounded surface (130) of the first running surface (115) and/or to carry out a pivoting movement (185) along the substantially rounded surface (130) of the second running surface (120), and
wherein a rotational axis (190) of the movable element (170) and the guide center (135) are arranged substantially at the same height (195).

3. The transport system (335) according to claim 1 or 2,
wherein the first roller (155), during the pivoting movement (185), defines a respective pivoting plane (200) which is oriented (220) in an inclined manner with respect to a travel plane (205) which is substantially in parallel with regard to a guide direction (350) of the first roller (155).

4. The transport system (335) according to any one of claims 1 to 3,
wherein the movable element (170) for rotational mounting (175) is preloaded via at least one spring unit (222) which adjoins the movable element (170), wherein the spring unit (222) comprises a spring element (225).

5. The transport system (335) according to claim 4,
wherein the spring element (225) and the rotational axis (190) are at a first distance (230) from each other
wherein the first roller (155), which is rotatably (175) mounted on the movable element (170), and the rotational axis (190) are at a second distance (235) from each other,
wherein the first distance (230) is larger than the second distance (235).

6. The transport system (335) according to claim 4 or 5,
wherein the spring unit (222) further comprises a tensioning element (260), which is particularly embodied as a tensioning screw (265),
wherein the tensioning element (260) is embodied to preload the spring element (225), which is embodied in particular as a helical compression spring (227).

7. The transport system (335) according to any one of the preceding claims, comprising a drive device (270) for driving the transport device (100), which comprises motor modules having coils, which are embodied along the running rail (105) and may be energized individually, and magnets (280) arranged on the at least one transport device (100),
wherein the coils generate a magnetic field for an operative connection with the magnets (280) arranged on the at least one transport device (100), and
wherein the at least one transport device (100) is set in motion by the operative connection.

8. The transport system (335) according to claim 7,
wherein the base body (180) of the transport device (100) is essentially U-shaped and comprises a base (285) having a first leg (290) and a second leg (295),
wherein the base body (180) comprises a recess (360) at least partially on an outer side of the base (300) and on an outer side of the first leg (305), the at least one movable element (170) being arranged in the recess,
wherein the spring element (225) is arranged in the region of the base (285), and
wherein the magnets (280) of the drive device (270) are each arranged on a first inner side (310) of the first leg (290) and on a second inner side (315) of the second leg (295) of the U-shaped base body (180).

## Revendications

1. Système de transport (335), comprenant :
au moins un rail de roulement (105) avec au moins une section de rail de roulement (110) et au moins un dispositif de transport mobile (100) qui est guidé le long de l'au moins une section de rail de roulement (110),
la section de rail de roulement (110) présentant une première surface de roulement (115),
la première surface de roulement (115) présentant une surface essentiellement arrondie (130) et comprenant un centre de guidage (135),
le centre de guidage (135) formant essentiellement un centre de cercle géométrique (140) dont la surface circulaire (145) englobe approximativement la surface arrondie (130) de la première surface de roulement (115),
le dispositif de transport (100) comprenant au moins un premier rouleau (155) qui s'applique de manière rotative contre la première surface de roulement (115),
le premier rouleau (155) étant monté en rotation (175) sur au moins un élément mobile (170) d'un corps de base (180) du dispositif de transport (100) afin d'effectuer un mouvement de pivotement (185) le long de la surface essentiellement arrondie (130) de la première surface de roulement (115),
**caractérisé en ce que**
un axe de rotation (190) de l'élément mobile (170) pour le mouvement de pivotement (185) et le centre de guidage (135) sont agencés essentiellement à la même hauteur (195).

2. Système de transport (335) selon la revendication 1,
le rail de roulement (105) comprenant au moins une section de rail de roulement incurvée (1101) présentant la première surface de roulement (115) et une deuxième surface de roulement (120) agencées sur des côtés opposés (125) de la section de rail de roulement incurvée (1101), la première surface de roulement (115) et la deuxième surface de roulement (120) présentant chacune la surface essentiellement arrondie (130) et comprenant chacune le centre de guidage (135),
le centre de guidage (135) formant respectivement essentiellement le centre de cercle géométrique (140), dont la surface circulaire (145) englobe respectivement approximativement la surface arrondie (130) de la première surface de roulement (115) ou la surface arrondie (130) de la deuxième surface de roulement (120), le dispositif de transport (100) présentant une pluralité de rouleaux (150) pour le guidage,
au moins le premier rouleau (155) et un deuxième rouleau (160) s'appliquant chacun de manière rotative contre la première surface de roulement (115) et au moins un troisième rouleau (165) s'appliquant de manière rotative contre la deuxième surface de roulement (120),
le premier rouleau (115) et le deuxième rouleau (120) et/ou le troisième rouleau (165) étant montés en rotation (175) sur au moins un élément mobile (170) d'un corps de base (180) du dispositif de transport (100),
le premier rouleau (155) et le deuxième rouleau (160) et/ou le troisième rouleau (165), chacun étant monté en rotation (175) sur l'élément mobile (170), étant chacun conçus pour effectuer un mouvement de pivotement (185) le long de la surface essentiellement arrondie (130) de la première surface de roulement (115) et/ou pour effectuer un mouvement de pivotement (185) le long de la surface essentiellement arrondie (130) de la deuxième surface de roulement (120), et
un axe de rotation (190) de l'élément mobile (170) et le centre de guidage (135) étant essentiellement agencés à la même hauteur (195).

3. Système de transport (335) selon la revendication 1 ou 2,
le premier rouleau (155) définissant, lors du mouvement de pivotement (185), respectivement un plan de pivotement (200) qui est orienté (220) par rapport à un plan de déplacement (205) qui est incliné essentiellement parallèlement à une direction de guidage (350) du premier rouleau (155).

4. Système de transport (335) selon l'une quelconque des revendications 1 à 3,
l'élément mobile (170) étant précontraint pour le support en rotation (175) par l'intermédiaire d'au moins une unité de ressort (222) qui est adjacente à l'élément mobile (170), l'unité de ressort (222) présentant un élément de ressort (225).

5. Système de transport (335) selon la revendication 4,
l'élément de ressort (225) et l'axe de rotation (190) présentant une première distance (230) l'un par rapport à l'autre,
le premier rouleau (155), qui est monté en rotation (175) sur l'élément mobile (170), et l'axe de rotation (190) présentant une deuxième distance (235) l'un par rapport à l'autre,
la première distance (230) étant plus grande que la deuxième distance (235).

6. Système de transport (335) selon la revendication 4 ou 5,
l'unité de ressort (222) présentant en outre un élément de tension (260), qui est notamment réalisé sous forme de vis de tension (265),
l'élément de tension (260) étant conçu pour précontraindre l'élément de ressort (225), qui est notamment réalisé sous forme de ressort de compression hélicoïdal (227).

7. Système de transport (335) selon l'une quelconque des revendications précédentes,
présentant un dispositif d'entraînement (270) pour entraîner le dispositif de transport (100), comprenant des modules de moteur avec des bobines réalisées le long du rail de roulement (105) et pouvant être alimentées individuellement, et des aimants (280) agencés sur l'au moins un dispositif de transport (100),
les bobines générant un champ magnétique pour une liaison fonctionnelle avec les aimants (280) agencés sur l'au moins un dispositif de transport (100), et l'au moins un dispositif de transport (100) étant mis en mouvement par la liaison fonctionnelle.

8. Système de transport (335) selon la revendication 7,
le corps de base (180) du dispositif de transport (100) étant réalisé essentiellement en forme de U et présentant une base (285) avec une première branche (290) et une deuxième branche (295),
le corps de base (180) présentant au moins partiellement, sur un côté extérieur de la base (300) et un côté extérieur de la première branche (305), un évidement (360) dans lequel est agencé l'au moins un élément mobile (170),
l'élément de ressort (225) étant agencé dans la zone de la base (285), et
les aimants (280) du dispositif d'entraînement (270) étant agencés respectivement sur un premier côté intérieur (310) de la première branche (290) et sur un deuxième côté intérieur (315) de la deuxième branche (295) du corps de base en forme de U (180).
